# EUROPEAN PATENT SPECIFICATION

(11) **EP 0 228 039 B1**
(45) Date of publication and mention of the grant of the patent: **24.05.1995**
(21) Application number: 86117667.5
(22) Date of filing: 18.12.1986
(51) Int. Cl.: C21C 5/32

(54) **Method and apparatus for transferring heat to molten metal**
Verfahren und Vorrichtung zum Aufheizen von geschmolzenem Metall
Procédé et appareil pour la transmission de chaleur à une masse de métal fondu

(30) Priority: 18.12.1985 JP 282952/85
(43) Date of publication of application: 08.07.1987
(73) Proprietor: NIPPON KOKAN KABUSHIKI KAISHA, Tokyo 100 (JP)
(72) Inventor: Nakamura, Hideo, c/o Nippon Kokan KK, Chiyoda-ku, Tokyo (JP); Ozeki, Akichika, c/o Nippon Kokan KK, Chiyoda-ku, Tokyo (JP); Abe, Masahiro, c/o Nippon Kokan KK, Chiyoda-ku, Tokyo (JP); Takahashi, Kenji, c/o Nippon Kokan KK, Chiyoda-ku, Tokyo (JP); Sugiyama, Shunichi, c/o Nippon Kokan KK, Chiyoda-ku, Tokyo (JP); Anzai, Takanori, c/o Nippon Kokan KK, Chiyoda-ku, Tokyo (JP)
(74) Representative: Sajda, Wolf E., Dipl.-Phys.

(56) References cited:
- DE-A- 2 750 725
- GB-A- 2 082 624
- US-A- 3 418 109
- WO85/02203
- Winnacker/Küchler: Chemische Technologie, vol. 6, (1973) Carl Hanser Verlag München, p. 420-421
- JOURNAL OF METALS, vol. 19, no.5, May 1967, p. 21-26; J.K.Stone : "Theoretical possibilities of operating the L-D process at high pressure"

## Description

The invention relates to a method and an apparatus for transferring heat to molten metal.

A conventional method for transferring heat to molten metal contained in a reaction vessel comprises the following steps: supplying the molten metal into the vessel; blowing in oxygen gas to the molten metal contained in the vessel; and blowing in oxygen gas for post-combustion into the vessel, thereby to cause post-combustion.

Also, a conventional apparatus for transferring heat to molten metal comprises a reaction vessel containing the molten metal, a first device for blowing in oxygen gas to the molten metal contained in the reaction vessel, and a second device for blowing in oxygen gas, thereby to cause post-combustion.

Such a method and an apparatus are known for example from US-A-3 418 109 or GB-A-2 082 624. In these conventional apparatus and methods, oxygen is blown into the vessel containing the molten metal, namely into the free space above the slag on top of the molten metal. However, when oxygen is blown in for the purpose of a secondary combustion, the oxygen brought into contact with the C-containing metal bath or granular iron simply performs a CO-forming reaction according to the relation 2C + O₂ → 2 CO. The reason is that the reaction system is rich in carbon. On the other hand, taking into account the reaction conditions, CO₂ once formed is reduced again into CO according to the relation CO₂ + C → 2 CO. So, the oxygen blown in fails to achieve the desired secondary combustion. By blowing in the oxygen for the secondary combustion from above, namely from above the metal bath and from above the slag contained in the vessel, a certain improvement of the secondary combustion rate can be obtained.

The publication "Chemische Technologie, Vol. 6, Metallurgie, München 1973, pages 420 and 421" discloses the general situation when carrying out the LD method in a converter, wherein a diagrammatic drawing discloses the states of the gas, slag and metal within the converter. In such a method, vigorous foaming of the slag is observed in the converter blow-refining step and during the decarborizing step so that an oxygen blowing lance is immersed in the foaming slag.

Recently, various proposals have been made with regard to a method for transferring heat to molten metal contained in a reaction vessel, in which CO gas generated therein can be combusted.

Some converters are equipped with a lance, for post-combustion, having nozzle holes in the lower end thereof, through which oxygen gas is blown out. CO gas generated from molten metal is post-combusted by oxygen gas blown out through the nozzle holes, and the heat produced thereby, as heat value necessary for the operation, is transferred through a layer of molten slag floating on top of the molten metal.

In the above-mentioned conventional method, amount of the CO gas generated is considerable, and the ascending speed thereof is, also, fast. As a result, the time for performing heat exchange between the high temperature post-combusted gas and foaming molten slag is undesirably shortened. Thus, this results in the efficiency in transferring heat to molten metal being low.

Document JP-A-74390/82, describes a method wherein:
(a) Fuel is supplied into a reaction vessel with molten metal already therein;
(b) A gas jet stream is blown onto the surface of the molten metal whereby the supplied fuel is gasified;
(c) The gasified gas is involved in the gas jet stream gas and a part of the gasified gas is combusted; and
(d) The gas generated by the combustion is conveyed, together with the heat produced by the gas combustion, onto the molten metal so as to transfer the heat to thereto.

In the above-mentioned method, however, the gaseous atmosphere above the molten slag is heated to a high temperature by the combustion of carbon monoxide, but the molten slag lies between the molten metal and the heated gaseous atmosphere, and, in addition, contains air. This produces the disadvantage in that the transfer of heat to the molten metal is not as efficient as it could be.

An object of the present invention is to provide a method for combusting optimizingly gas generated within a reaction vessel, and for transferring the heat produced thereby to molten metal contained in the vessel.

A further object of the present invention is to provide an apparatus which has a reaction vessel and in which gas generated within the vessel can be optimizingly combusted, and the heat produced thereby can be effectively transferred to molten metal contained in the vessel.

Another object of the present invention is to provide a method for decreasing the consumption of carbonaceous material used as the reducing agent.

The object underlying the present invention is solved by a method for transferring heat to molten metal contained in a reaction vessel, comprising the following steps:
- supplying the molten metal into the vessel;
- blowing in oxygen gas to the molten metal contained in the vessel;
- maintaining the pressure of a gaseous atmosphere within the vessel at a pressure of 2 to 5 bar by means of a pessure regulator; and
- blowing in oxygen gas for post-combustion into the volume of a layer of molten slag by a plurality of side-blow tuyeres set in a wall of the vessel and opening into the layer of molten slag contained in the vessel.

In a further development of the method according to the invention, the step of blowing in oxygen gas to the molten metal includes blowing the gas through a top blow lance.

In a still further development according to the invention, the step of blowing in oxygen gas to the molten metal includes blowing the gas through a bottom blow tuyere.

In a specific embodiment of such a method according to the invention, blowing the oxygen gas through a plurality of the side-blow tuyeres further includes blowing the gas at a downward-sloping angle.

In a still further specific embodiment according to the method of the invention, the step of blowing oxygen gas through a plurality of the side-blow tuyeres further includes blowing the gas at an angle ϑ, in a horizontal plane, with respect to the radius of the vessel, and also at upward-sloping and downward-sloping angles, through the side-blow tuyeres, the number of which is represented by n, wherein the angle ϑ is in the following ranges:

$\text{0 < ϑ < 180°/n in the case where n ≧ 3, or}$
$\text{0 < ϑ < 45° in the case where n = 2.}$

According to a further development of the method according to the invention, the step of supplying the molten metal into the vessel includes supplying the molten metal into a converter.

According to a further development of the method according to the invention, the step of supplying the molten metal into the vessel includes supplying the molten metal into a smelting reduction furnace.

A still further development of the method according to the invention is characterized by the further step of supplying iron ore and carbonaceous material into the vessel.

Another object underlying the present invention is solved by an apparatus for transferring heat to molten metal, comprising
- a reaction vessel containing the molten metal;
- a first device for blowing in oxygen gas to the molten metal contained in the reaction vessel;
- a second device comprising a plurality of side-blow tuyeres set in a wall of the vessel and opening into a layer of molten slag, for blowing in oxygen gas to cause post-combustion; and
- a pressure regulator connected to the vessel for maintaining and controlling the pressure of the gaseous atmosphere at a pressure higher than atmospheric pressure.

According to a further development of the apparatus according to the invention, the first device for blowing in oxygen gas includes a top blow lance.

According to a further development of the apparatus according to the invention, the first device for blowing in oxygen gas includes at least one bottom-blow tuyere.

In a specific embodiment of the apparatus according to the invention, the side-blow tuyeres are slowing downwards.

In a specific embodiment of the apparatus according to the invention, the side-blow tuyeres are provided to blow in oxygen gas at an angle ϑ, in a horizontal plane, with respect to the radius of the vessel, and also at upward-sloping and downward-sloping angles, the angle ϑ being in the following ranges:

$\text{0 < ϑ < 180°/n in the case where n ≧ 3, or}$
$\text{0 < ϑ < 45° in the case where n = 2,}$

wherein n is the number of the side-blow tuyeres.

This invention can be more fully understood from the following detailed description when taken in conjunction with the accompanying drawings, in which:
Fig. 1 is a schematic view illustrating an apparatus with post combustion gas supply through nozzle holes set in the lower end of the top blow lance;
Fig. 2 is a schematic view illustrating another example of an apparatus embodying the present invention;
Fig. 3 is a schematic view of a further apparatus embodying the present invention;
Fig. 4 is a schematic cross-sectional plan view of an apparatus for blowing in oxygen gas for post-combustion performed, according to the present invention;
Fig. 5 is a schematic sectional side elevation view of the apparatus shown in Fig. 4; and
Fig. 6 is a graphic representation showing the relationship between oxygen flow-rate for post-combustion and heat efficiency.

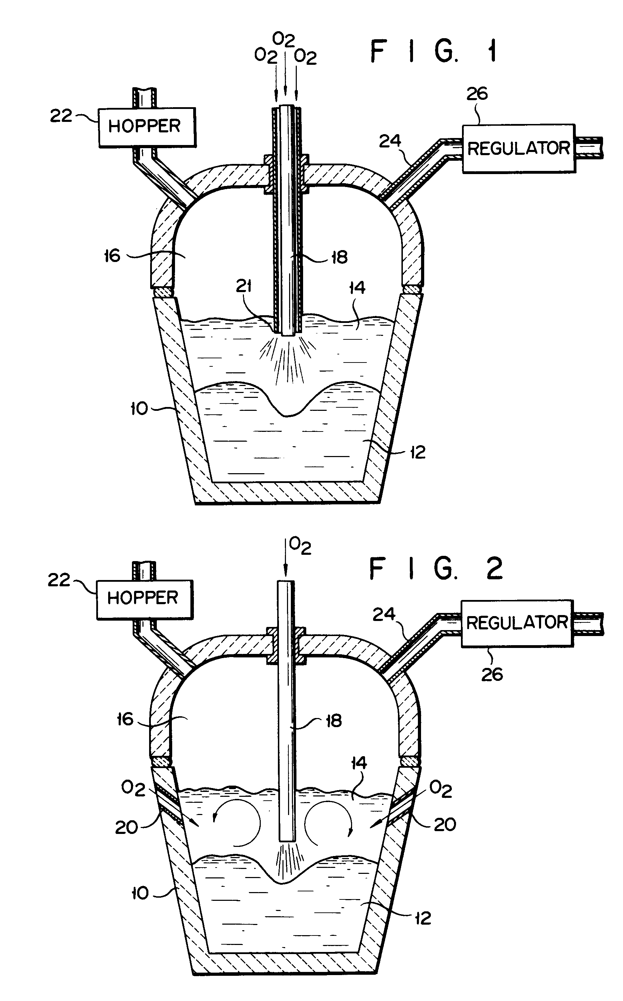

It is referred to Fig. 1 showing schematically an apparatus having a smelting reduction furnace. The reference numerals are used as follows:
- 10 =: furnace wall;
- 12 =: molten metal;
- 14 =: molten slag layer;
- 16 =: CO-CO₂ gaseous atmosphere;
- 18 =: top blow lance;
- 21 =: nozzle holes through which post-combustion oxygen gas is blown out;
- 22 =: material feed hopper;
- 24 =: outlet opening to the gaseous atmosphere; and
- 26 =: pressure regulator for maintaining the pressure of the gaseous atmosphere higher than atmospheric pressure.

Iron ore and coal are charged through the material feed hopper 22, onto the molten metal 12 within a vessel formed by the furnace wall 10. Oxygen gas is blown in through the top blow lance 18. A portion of the charged coal is combusted with the oxygen gas blown in, and CO gas is produced. Another portion dissolves into the molten metal 12, and the balance remains in the molten slag layer 14.

The iron ore is reduced by carbon contained in the molten metal 12 and the molten slag layer 14. The CO gas produced by the combustion process ascends through the molten slag layer 14, and is further combusted with oxygen gas blown out through the nozzle holes 21 set in the lower end of the top blow lance 18, and heat is produced. The combustion of the CO gas with the blown out oxygen gas is, throughout the description and the claims contained herein, denoted by the term post-combustion. The amount of oxygen gas for reduction and that of oxygen gas for post-combustion are separately controlled.

The CO-CO₂ gaseous atmosphere 16 is kept at higher than atmospheric pressure, by means of the pressure regulator 26 connected to the outlet 24 which opens to the gaseous atmosphere. Since keeping the pressure higher than atmospheric pressure is maintained, the slower the post-combusted gas ascends, the longer the post-combusted gas stays in the molten slag layer 14. In addition, there is a greater chance that the CO gas ascending through the molten slag layer 14 will be mixed with oxygen gas provided for the post-combustion, and will be combusted therewith.

Thus the decrease of the speed at which the gas ascends through the molten slag layer 14 lengthens the time for heat exchange to take place, and, as a result, improves the heat transfer to the molten slag layer 14. Finally, the heat transfer to the molten metal 12 is attained through the molten slag layer 14. This results in an effective use of thermal energy.

In the foregoing, the embodiment is applied to a smelting reduction process for iron ore. The application thereof, however, is not limited to the smelting reduction process and can be applied to steel making for decarburization and dephosphorization.

To carry out the embodiment, the pressure of gaseous atmosphere 16 is kept at approximately 2 to 5 bar . This range reduces the speed at which the post-combusted gas ascends, to a half to a fifth of the conventional rate and also lowers the rate of ascend of the CO gas generated in the molten metal 12. This pressure range does not affect the speed of the reaction represented by the following formula:

$\text{C +} \frac{\text{1}}{\text{2}} \text{O₂ = CO.}$

If the pressure is less than 2 bar, it may be impossible to reduce the rate of ascend of the post-combusted CO₂ gas and the generated CO gas.

On the other hand, a pressure of more than 5 bar may undesirably reduce the speed of the reaction, which is given by the above-mentioned formula. The pressure of the CO-CO₂ gaseous atmosphere 16 is controlled by the pressure regulator 26, more precisely by controlling the opening of the valve of the pressure regulator 26 in accordance with the pressure measured.

Fig. 2 schematically illustrates an example of another apparatus according to the invention having a reaction vessel provided with a plurality of side-blow tuyeres 20 set in the furnace wall 10. Through the tuyeres 20, oxygen gas for post-combustion can be blown into the molten slag layer. These tuyeres 20 are sloping downward and open to the layer 14 of slag contained in the vessel. The quantity of charging material and the quantity of tapping molten metal 12 are controlled so as to keep the level of layer 14 constant. Material is charged through the feeding hopper 22. A tapping hole for the molten metal 12 (not shown) can be cut in the furnace wall 10 in the usual known manner.

Oxygen gas, for reduction, is blown in the molten metal 12, through the top blow lance 18. The oxygen gas for post-combustion is blown into the vessel through the tuyeres 20 sloping downward and opening to the layer 14 of the molten slag. As a result, the molten slag 14 first moves downward, then hits against the top of the molten metal 12, and finally moves upward, thus circulating within the vessel. The oxygen gas reacts with CO gas ascending through the layer 14 of molten slag. The reaction heat is transferred to the molten slag 14, and is further transferred to the molten metal 12, since the molten slag 14 is circulating.

The tuyeres 20 are sloping downwards in the apparatus shown in Fig. 2. They can be inclined upward, in which case the molten slag 14 can circulate in the same manner. However, it is preferable that the tuyeres 20 be sloping downwards, since more oxygen gas can be blown into the molten slag 14, and the molten slag 14 can circulate more vigorously.

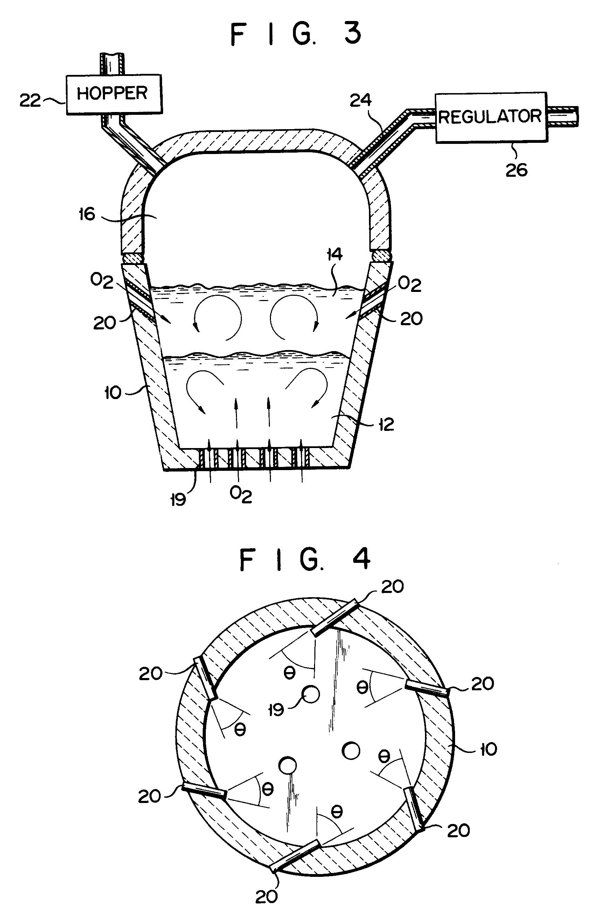

Furthermore, in place of the top-blow lance 18 shown in Fig. 2, for blowing in oxygen gas for reduction, bottom-blow tuyeres 19 shown in Fig. 3 can be employed.

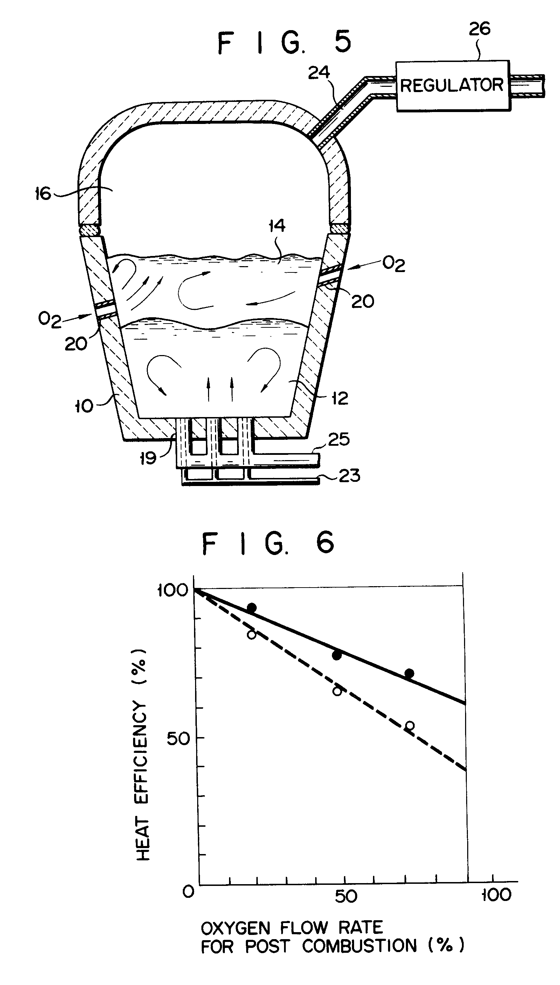

Figs. 4 and 5 show still another apparatus having a reaction vessel. A plurality of bottom-blow tuyeres 19 are set in the bottom of the vessel, and a plurality of side-blow tuyeres 20 are provided in the furnace wall 10 of the vessel. The side-blow tuyeres 20 are inclined, in a horizontal plane, at an angle ϑ to the radius of the vessel, as is shown in Fig. 4. Some of the tuyeres 20 are sloping downwards, and the others are sloping upwards, as is illustrated in Fig. 5. The angle ϑ can be given as follows:

$\text{0 < ϑ < 180°/n, where} {\text{n}}_{̲} \text{is the number of tuyeres 20 and is 3 or more, or}$
$\text{0 < ϑ < 45°, where n = 2.}$

The angle ϑ can be changed within the ranges represented by the foregoing formulas. If the angle ϑ falls outside the ranges, the molten slag 14 cannot circulate sufficiently.

In the apparatus of Figs. 4 and 5, all the tuyeres 20 are inclined at the same angle to the radius of the vessel. Instead, some of the tuyeres 20 can be inclined at one angle, whereas the others can be inclined at another angle.

As has been described, some of the tuyeres 20 are sloping downwards, and the others are sloping upwards. More specifically, they can be sloping alternately downwards and upwards, or, for instance, any two adjacent tuyeres 20 can be sloping down while the next two are sloping up.

The side-blow tuyeres 20 are set in the furnace wall 10 such that they open to the layer 14 of molten slag. Molten metal 12 is kept moving by the stream of oxygen gas provided for the reduction thereof, or by the blow of powders and gas blown thereon during the smelting reduction process, but the surface level of the molten metal 12 and the thickness of the molten-slag layer 14 are constantly controlled. Accordingly, the side-blow tuyeres 20 can be positioned to open to the molten-slag layer 14.

Oxygen gas for reduction is blown in through an outer pipe 25 of the bottom-blow tuyeres 19, and fine iron ore and powdered coal are blown in through an inner pipe 23 of the tuyeres 19. Oxygen gas for post-combustion is blown in through the side-blow tuyeres 20. Layer 14 of molten slag highly heated by post-combustion is circulated within the vessel, in both a horizontal plane and a vertical plane, and transfers the heat to the molten metal 12 since it is in contact with the molten metal 12.

### Example 1

An example of smelting reduction of iron ore will now be described, using the apparatus shown in Fig. 1.

In this example, 50 tons of molten metal 12 were fed into the melting reduction furnace. The pressure of gaseous atmosphere 16 was set to 3 bar by the pressure regulator 26.

Iron ore and coal were fed through the feeding hopper 22. Oxygen gas for reduction was blown in through the lance 18, and oxygen gas for post-combustion was blown in through the nozzle holes 21 set in the lower end of the lance 18.

The oxygen gas for post-combustion was introduced into the molten slag layer 14 in an amount of 50% of oxygen flow-rate for post-combustion which is given as follows: 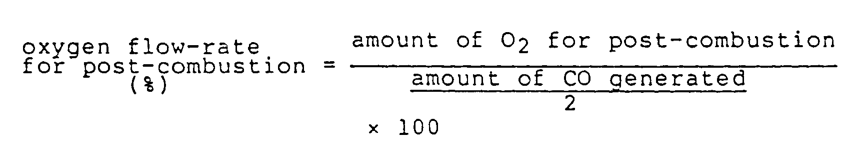
The rate of molten metal production was 32 tons/hour.

To demonstrate the advantage of the invention, Controller 1, wherein the gaseous atmosphere 16 was set to atmospheric pressure, was carried out, thereby producing molten metal 12 at the rate of 32 tons/hour. The results are shown in Table 1, along with the results of Example 1.

**Table 1**

| | Controller 1 | Example 1 |
|---|---|---|
| Iron ore (kg/min.) | 840 | 840 |
| Coal (kg/min.) | 380 | 312 |
| Amount of O₂ (Nm³/min.) | 275 | 225 |
| Oxygen flow-rate for post-combustion (%) | 47 | 48 |
| Heat efficiency (%) | 63 | 80 |

The "heat efficiency" is given:

$\text{Heat efficiency =} \frac{\text{A}}{\text{B}}$

where A represents heat given to molten metal 12, and B represents heat produced when all oxygen gas for post-combustion is consumed.

In Example 1, as is clearly understood from Table 1, the consumption of coal and that of oxygen gas were reduced, compared with Controller 1, since the heat efficiency of Example 1 was higher than that of Controller 1.

### Example 2

Another example of smelting reduction of iron ore was carried out, using the apparatus shown in Fig. 1. The smelting operation was performed with gaseous atmosphere 16 being set at a pressure of 3 bar, and oxygen gas for post-combustion was introduced in an oxygen flow-rate for post-combustion of 0 to 100%.

Controller 2, wherein the gaseous atmosphere 16 was set to atmospheric pressure, and oxygen gas was introduced in the same oxygen flow-rate for post-combustion was performed.

Fig. 6 shows graphically the results of Example 2 and Controller 2. The results of Example 2 and Controller 2 are illustrated respectively by a solid and a broken line. As these lines show, the heat efficiency of Example 2 is 15%, on average, higher than that of Controller 2. Therefore, the transfer of heat to the molten metal 12 can be achieved efficiently by controlling, appropriately, the pressure of the gaseous atmosphere 16, by means of the pressure regulator 26 in compliance with the amount of CO gas generated and with the state of foaming molten slag layer 14.

### Example 3

In this example, two different test operations of smelting reduction were carried out by changing the method of blowing in oxygen gas for post-combustion. The pressure of the gaseous atmosphere 16 was set to 3 bar .

### Test operation A

An apparatus as is shown in Fig. 2 was employed. Oxygen gas for reduction, and oxygen gas for post-combustion, were respectively blown in straight downwards through the lance 18 and at a downward-sloping angle through six side-blow tuyeres 20.

### Test operation B

An apparatus as is shown in Figs. 4 and 5 was employed. Six side-blow tuyeres 20 were set in the furnace wall 10 at an angle ϑ of 30°. Three bottom-blow tuyeres 19 were each composed of an inner pipe 23 and an outer pipe 25 embracing the inner pipe 23. Oxygen gas for reduction, was introduced through the outer pipe 25 of each tuyere 19, and a mixture of fine iron ore and powdered coal, was introduced through the inner pipe 23. Oxygen gas for post-combustion was blown in through the side-blow tuyeres 20, so as to circulate the molten slag 14 in both a horizontal plane and a vertical plane.

The results of the operations A and B are listed, together with those of Example 1, in Table 2.

**Table 2**

| | Example 1 | Example 3A | Example 3B |
|---|---|---|---|
| Iron ore (kg/min.) | 840 | 840 | 840 |
| Coal (kg/min.) | 312 | 305 | 298 |
| Amount of O₂ (Nm³/min.) | 225 | 220 | 215 |
| Oxygen flow-rate for post-combustion (%) | 48 | 49 | 48 |
| Heat efficiency (%) | 80 | 86 | 88 |

The results of Examples 3A and 3B proved an improvement in the heat efficiency, and a reduction in the consumption of coal and oxygen needed for reduction, in comparison with Example 1.

## Claims

1. A method for transferring heat to molten metal (12) contained in a reaction vessel, comprising the following steps:
- supplying the molten metal (12) into the vessel;
- blowing in oxygen gas to the molten metal (12) contained in the vessel;
- maintaining the pressure of a gaseous atmosphere (16) within the vessel at a pressure of 2 to 5 bar by means of a pressure regulator; and
- blowing in oxygen gas for post-combustion into the volume of a layer of molten slag (14) by a plurality of side-blow tuyeres (20) set in a wall (10) of the vessel and opening into the layer (14) of molten slag contained in the vessel.

2. The method according to claim 1,
characterized in that the step of blowing in oxygen gas to the molten metal (12) includes blowing the gas through a top blow lance (18).

3. The method according to claim 1 or 2,
characterized in that the step of blowing in oxygen gas to the molten metal (12) includes blowing the gas through a bottom blow tuyere (19).

4. The method according to any of claims 1 to 3,
characterized in that blowing the oxygen gas through a plurality of the side-blow tuyeres (20) further includes blowing the gas at a downward-sloping angle.

5. The method according to any of claims 1 to 4,
characterized in that the step of blowing oxygen gas through a plurality of the side-blow tuyeres (20) further includes blowing the gas at an angle (ϑ), in a horizontal plane, with respect to the radius of the vessel, and also at upward-sloping and downward-sloping angles, through the side-blow tuyeres (20) the number of which is represented by n, wherein the angle (ϑ) is in the following ranges:
$\text{0 < ϑ < 180°/n in the case where n ≧ 3, or}$
$\text{0 < ϑ < 45° in the case where n = 2.}$

6. The method according to any of claims 1 to 5,
characterized in that the step of supplying the molten metal (12) into the vessel includes supplying the molten metal (12) into a converter.

7. The method according to any of claims 1 to 6,
characterized in that the step of supplying the molten metal (12) into the vessel includes supplying the molten metal (12) into a smelting reduction furnace.

8. The method according to any of claims 1 to 7,
characterized by the further step of supplying iron ore and carbonaceous material into the vessel.

9. An apparatus for transferring heat to molten metal (12), comprising
- a reaction vessel containing the molten metal (12);
- a first device (18, 19) for blowing in oxygen gas to the molten metal (12) contained in the reaction vessel;
- a second device (20) comprising a plurality of side-blow tuyeres (20) set in a wall (10) of the vessel and opening into a layer of molten slag (14), for blowing in oxygen gas to cause post-combustion; and
- a pressure regulator connected to the vessel for maintaining and controlling the pressure of a gaseous atmosphere (16) at a pressure higher than atmospheric pressure.

10. The apparatus according to claim 9,
characterized in that the first device (18, 19) includes a top blow lance (18).

11. The apparatus according to claim 9 or 10,
characterized in that the first device (18, 19) includes at least one bottom-blow tuyere (19).

12. The apparatus according to any of claims 9 to 11,
characterized in that the side-blow tuyeres (20) are sloping downwards.

13. The apparatus according to any of claims 9 to 12,
characterized in that the side-blow tuyeres (20) are provided to blow in oxygen gas at an angle (ϑ), in a horizontal plane, with respect to the radius of the vessel, and also at upward-sloping and downward-sloping angles, the angle (ϑ) being in the following ranges:
$\text{0 < ϑ < 180°/n in the case where n ≧ 3, or}$
$\text{0 < ϑ < 45° in the case where n = 2,}$
wherein n is the number of the side-blow tuyeres (20).

## Patentansprüche

1. Verfahren zum Übertragen von Wärme auf geschmolzenes Metall (12), das sich in einem Reaktionsbehälter befindet, umfassend die folgenden Schritte:
- Einfüllen des geschmolzenen Metalls (12) in den Behälter;
- Einblasen von Sauerstoffgas zu dem in dem Behälter enthaltenen geschmolzenen Metall (12);
- Halten des Druckes einer Gasatmosphäre (16) innerhalb des Behälters bei einem Druck von 2 bis 5 Bar mittels eines Druckreglers; und
- Einblasen von Sauerstoffgas zur Nachverbrennung in das Volumen einer Schicht aus geschmolzener Schlacke (14) mit einer Vielzahl von Seitenblasrohren (20), die in eine Wand (10) des Behälters eingesetzt sind und sich in die Schicht (14) aus geschmolzener Schlacke öffnen, die sich in dem Behälter befindet.

2. Verfahren nach Anspruch 1,
dadurch gekennzeichnet,
daß der Schritt des Einblasens von Sauerstoffgas zu dem geschmolzenen Metall (12) das Einblasen von Gas durch eine Blaslanze (18) im Oberteil umfaßt.

3. Verfahren nach Anspruch 1 oder 2,
dadurch gekennzeichnet,
daß der Schritt des Einblasens von Sauerstoffgas zu dem geschmolzenen Metall (12) das Einblasen von Gas durch ein Blasrohr (19) im Boden umfaßt.

4. Verfahren nach einem der Ansprüche 1 bis 3,
dadurch gekennzeichnet,
daß das Einblasen des Sauerstoffgases durch eine Vielzahl von Seitenblasrohren (20) ferner das Einblasen des Gases unter einem nach unten geneigten Winkel umfaßt.

5. Verfahren nach einem der Ansprüche 1 bis 4,
dadurch gekennzeichnet,
daß der Schritt des Einblasens von Sauerstoffgas durch eine Vielzahl von Seitenblasrohren (20) ferner das Einblasen des Gases unter einem Winkel (Θ), in einer horizontalen Ebene, bezüglich des Radius des Behälters sowie unter nach oben und nach unten geneigten Winkeln durch die Seitenblasrohre (20) umfaßt, deren Anzahl mit n angegeben ist, wobei der Winkel (Θ) in den folgenden Bereichen liegt:
$\text{0 < Θ < 180°/n für den Fall, daß n ≧ 3 oder}$
$\text{0 < Θ < 45° für den Fall, daß n = 2.}$

6. Verfahren nach einem der Ansprüche 1 bis 5,
dadurch gekennzeichnet,
daß der Schritt des Einfüllens des geschmolzenen Metalles (12) in den Behälter das Einfüllen des geschmolzenen Metalles (12) in einen Konverter umfaßt.

7. Verfahren nach einem der Ansprüche 1 bis 6,
dadurch gekennzeichnet,
daß der Schritt des Einfüllens des geschmolzenen Metalles (12) in den Behälter das Einfüllen des geschmolzenen Metalles (12) in einen Schmelzreduktionsofen umfaßt.

8. Verfahren nach einem der Ansprüche 1 bis 7,
gekennzeichnet durch den weiteren Schritt des Einfüllens von Eisenerz und kohlenstoffhaltigem Material in den Behälter.

9. Vorrichtung zum Übertragen von Wärme auf geschmolzenes Metall (12), die folgendes aufweist:
- einen Reaktionsbehälter, der das geschmolzene Metall (12) enthält;
- eine erste Einrichtung (18, 19) zum Einblasen von Sauerstoffgas zu dem geschmolzenen Metall (12), das in dem Reaktionsbehälter enthalten ist;
- eine zweite Einrichtung (20), die eine Vielzahl von Seitenblasrohren (20) aufweist, die in eine Wand (10) des Behälters eingesetzt sind und die sich in eine Schicht aus geschmolzener Schlacke (14) öffnen, um Sauerstoffgas einzublasen, um eine Nachverbrennung zu bewirken; und
- einen Druckregler, der an den Behälter angeschlossen ist, um den Druck einer Gasatmosphäre (16) zu steuern und bei einem Druck zu halten, der höher als der Atmosphärendruck ist.

10. Vorrichtung nach Anspruch 9,
dadurch gekennzeichnet,
daß die erste Einrichtung (18, 19) eine Blaslanze (18) an der Oberseite aufweist.

11. Vorrichtung nach Anspruch 9 oder 10,
dadurch gekennzeichnet,
daß die erste Einrichtung (18, 19) mindestens eine Blaslanze (19) im Boden aufweist.

12. Vorrichtung nach einem der Ansprüche 9 bis 11,
dadurch gekennzeichnet,
daß die Seitenblasrohre schräg nach unten verlaufen.

13. Vorrichtung nach einem der Ansprüche 9 bis 12,
dadurch gekennzeichnet,
daß die Seitenblasrohre (20) derart vorgesehen sind, daß sie Sauerstoffgas unter einem Winkel (Θ), in einer horizontalen Ebene, bezüglich des Radius des Behälters und außerdem unter nach oben gerichteten und nach unten gerichteten Winkeln einblasen, wobei der Winkel (Θ) in den folgenden Bereichen liegt:
$\text{0 < Θ < 180°/n für den Fall, daß n ≧ 3 oder}$
$\text{0 < Θ < 45° für den Fall, daß n = 2,}$
wobei n die Anzahl der Seitenblasrohre (20) ist.

## Revendications

1. Procédé pour apporter de la chaleur à un métal en fusion (12) contenu dans une cuve de réaction, comprenant les étapes suivantes :
- envoi du métal en fusion (12) dans la cuve,
- soufflage de gaz: oxygène dans le métal en fusion (12) contenu dans la cuve,
- maintien de la pression d'une atmosphère gazeuse (16) à l'intérieur de la cuve à une valeur de 2 à 5 bar à l'aide d'un régulateur de pression, et
- soufflage de gaz oxygène pour produire une post-combustion dans le volume d'une couche de laitier en fusion (14) par une pluralité de tuyères (20) de soufflage latéral placées dans une paroi (10) de la cuve et débouchant dans la couche (14) de laitier en fusion contenue dans la cuve.

2. Procédé selon la revendication 1, caractérisé en ce que l'étape de soufflage de gaz oxygène dans le métal en fusion (12) comprend le soufflage du gaz: par une lance (18) de soufflage par le dessus.

3. Procédé selon la revendication 1 ou 2, caractérisé en ce que l'étape de soufflage de gaz oxygène dans le métal en fusion (12) comprend le soufflage du gaz par une tuyère (19) de soufflage par le fond.

4. Procédé selon l'une quelconque des revendications 1 à 3, caractérisé en ce que le soufflage du gaz oxygène par une pluralité de tuyères (20) de soufflage latéral comprend en outre le soufflage du gaz suivant un angle d'inclinaison vers le bas.

5. Procédé selon l'une quelconque des revendications 1 à 4, caractérisé en ce que l'étape de soufflage du gaz: oxygène par une pluralité de tuyères (20) de soufflage latéral comprend en outre le soufflage du gaz suivant un angle (ϑ), dans un plan horizontal, par rapport au rayon de la cuve, et également suivant des angles d'inclinaison vers le haut et d'inclinaison vers le bas, par des tuyères (20) de soufflage latéral dont le nombre est représenté par n, sachant que l'angle (ϑ) se situe dans les fourchettes suivantes :
$\text{0 < ϑ < 180°/n si n ≧ 3 ou}$
$\text{0 < ϑ < 45° si n = 2}$

6. Procédé selon l'une quelconque des revendications 1 à 5, caractérisé en ce que l'étape d'envoi du métal en fusion (12) dans la cuve comprend l'envoi du métal en fusion (12) dans un convertisseur.

7. Procédé selon l'une quelconque des revendications 1 à 6, caractérisé en ce que l'étape d'envoi du métal en fusion (12) dans la cuve comprend l'envoi du métal en fusion (12) dans un four de réduction de fonderie.

8. Procédé selon l'une quelconque des revendications 1 à 7, caractérisé par l'étape supplémentaire consistant à envoyer du minerai de fer et un matériau carboné dans la cuve.

9. Appareil pour apporter de la chaleur à du métal en fusion (12), qui comprend :
- une cuve de réaction contenant le métal en fusion (12),
- un premier dispositif (18, 19) pour souffler du gaz oxygène dans le métal en fusion (12) contenu dans la cuve de réaction,
- un second dispositif (20) comprenant une pluralité de tuyères (20) de soufflage latéral placées dans une paroi (10) de la cuve et débouchant dans une couche de laitier en fusion (14), destiné à souffler du gaz oxygène pour provoquer une post-combustion, et
- un régulateur de pression couplé à la cuve pour commander et maintenir la pression d'une atmosphère gazeuse (16) à une valeur plus élevée que la pression atmosphérique.

10. Appareil selon la revendication 9, caractérisé en ce que le premier dispositif (18, 19) comprend une lance (18) de soufflage par le dessus.

11. Appareil selon la revendication 9 ou 10, caractérisé en ce que le premier dispositif (18, 19) comprend au moins une tuyère (19) de soufflage par le fond.

12. Appareil selon l'une quelconque des revendications 9 à 11, caractérisé en ce que les tuyères (20) de soufflage latéral sont inclinées vers le bas.

13. Appareil selon l'une quelconque des revendications 9 à 12, caractérisé en ce que les tuyères (20) de soufflage latéral sont prévues pour souffler du gaz oxygène suivant un angle (ϑ), dans un plan horizontal, par rapport au rayon de la cuve, et également suivant des angles d'inclinaison vers le haut et d'inclinaison vers le bas, l'angle (ϑ) se situant dans les fourchettes suivantes :
$\text{0 < ϑ < 180°/n si n ≧ 3 ou}$
$\text{0 < ϑ < 45° si n = 2}$
sachant que n est le nombre des tuyères (20) de soufflage latéral.
